# EUROPEAN PATENT APPLICATION

(11) **EP 1 319 855 A1**
(43) Date of publication of application: **18.06.2003**
(21) Application number: 02026982.5
(22) Date of filing: 05.12.2002
(51) Int. Cl.: F16D 31/04

(54) **Fluid clutch**

(30) Priority: 12.12.2001 JP 2001378259
(71) Applicant: ISUZU MOTORS LIMITED, Shinagawa-ku, Tokyo (JP)
(72) Inventor: Yamamoto, Yasushi, Isuzu Adv. Engine. Center LTD., Kanagawa (JP)
(74) Representative: Beetz & Partner Patentanwälte

(57) **Abstract**

A fluid clutch arranged between the first shaft (3) and the second shaft (4) which are arranged on the same axis, comprising a casing (11) drive-coupled to the first shaft (3), a gear pump (18) arranged in the casing (11), an intake passage (21) formed in the casing (11) and in the second shaft (4) so as to be communicated with an intake port (19) of the gear pump (18), a discharge passage (24) formed in the casing (11) and in the second shaft (4), so as to be communicated with a discharge port (20) of the gear pump (18), and a control valve (30) that has a shape of ring with the second axis as a center and is arranged in a hub portion (152) of the first pump gear (15) and that controls the communication area between the intake passage (21) and the discharge passage (24).

## Description

### Field of the Invention

The present invention relates to a fluid clutch for transmitting a rotational torque of an engine such as an internal combustion engine and, more specifically, to a fluid clutch which is capable of varying the transmission of torque.

### Description of the Related Art

As the clutch for transmitting the rotational torque of an engine such as an internal combustion engine, there has generally been used a friction clutch, a fluid coupling and a torque converter.

The friction clutch comprises a flywheel mounted on a crank shaft of the engine, a pressure plate having a clutch facing arranged being opposed to the flywheel, and a clutch driven plate that is arranged between the flywheel and the pressure plate and is mounted on an input shaft of a transmission arranged on the same axis as the crank shaft. The friction clutch controls the transmission force of torque by adjusting the pushing force of the pressure plate.

The fluid coupling and the torque converter comprise, respectively, a casing coupled to the crank shaft (input shaft) of the engine, a pump that is arranged opposite to the casing and is mounted on the casing, a turbine that is arranged in a chamber formed by the pump and the casing in such a manner to be opposed to the pump and is mounted on an output shaft arranged on the same axis as the crank shaft (input shaft), and an operation fluid filled in a pump chamber. In the thus constituted fluid coupling, a centrifugal force produced by the rotation of the pump acts on the operation fluid in the pump, and the operation fluid that flows toward the outer peripheral side due to the centrifugal force is allowed to flow into the turbine from the outer peripheral side thereby to drive the turbine.

In the friction clutch, however, the clutch facing is worn away and hence, must be renewed after used for a predetermined period of time. Besides, it is difficult to control the torque in the case of automatically controlling the clutch.

In the fluid coupling and torque converter, on the other hand, no friction wear takes place since the pump on the drive side is not in mechanical contact with the turbine which is on the driven side. However, it is not allowed to freely control the transmission of torque and besides, since no torque is transmitted unless there is a difference in the rotational speed between the pump and the turbine, the transmission of torque approaches zero (0) when the ratio of the rotational speed of the pump and the rotational speed of the pump is nearly 1. When the fluid coupling and the torque converter are used for a driving device of a vehicle, a drag torque is produced due to their natures in a state where the vehicle is at a halt, the engine is driven and a speed-change gear is engaged, i.e., in a state where input shaft rotates but the output shaft is at rest. The drag torque, generally, stands for a transmission of torque in a state where the engine is in operation at an idling rotational speed. The drag torque increases to a considerable degree when the rotational speed ratio at which a design point of the fluid coupling becomes a maximum efficiency, is zero (0), i.e., when the ratio of the rotational speed of the pump and the rotational speed of the pump is zero (0). In other words, the drag torque increases to a considerable degree when the engine is driven at an idling rotation and the vehicle is at rest. When the drag torque is great, the idling operation of the engine becomes very unstable, and this unstable rotation becomes a cause of generating abnormal vibration in the driving system. Besides, a large drag torque causes worsening of the fuel efficiency during the idling operation.

The present inventor has proposed in Japanese Patent Application No. 2000-330208 a fluid clutch which intends to solve problems inherent in the above-mentioned friction clutches, fluid couplings and torque converters. This fluid clutch comprises:
a casing drive-coupled to the first shaft;
a gear pump comprising the first pump gear which are arranged in the casing, drive-coupled to the second shaft and provided with a gear on the outer periphery thereof and the second pump gears which are arranged in a pump chamber formed in the casing and engage with the first pump gear;
an intake passage that is formed in the casing and in the second shaft and is communicated with an intake port of the gear pump;
a discharge passage that is formed in the casing and in the second shaft and is communicated with a discharge port of the gear pump; and
a control valve that is arranged in the second shaft and controls a communication area between the intake passage and the discharge passage.

In the fluid clutch proposed in Japanese Patent Application No. 2000-330208, however, the control valve is arranged in the second shaft, making it difficult to obtain a sufficiently large flow passage area due to the structure. Even when the control valve is fully opened, therefore, the flow rate cannot be attained to a sufficient degree. In a state where the first shaft rotates but the second shaft is at rest, therefore, the amount discharged from the gear pump is large and cannot be dealt with even though the control valve is fully opened, whereby the drag torque is difficult to decrease.

### SUMMARY OF THE INVENTION

It is therefore an object of the present invention to provide a fluid clutch capable of easily controlling the transmission of torque and decreasing the drag torque.

In order to accomplish the above-mentioned object according to the present invention, there is provided a fluid clutch disposed between the first shaft and the second shaft.

The first shaft and the second shaft can be arranged on the same axis.

The fluid clutch may comprise a casing drive-coupled to the first shaft.

Further, the fluid clutch may comprise a gear pump comprising the first pump gear that is arranged in the casing, drive-coupled to the second shaft and provided with a gear on the outer periphery thereof, and the second pump gears which are arranged in a pump chamber formed in the casing and are in mesh with the first pump gear,
an intake passage that is formed in the casing and is communicated with an intake port of the gear pump,
a discharge passage that is formed in the casing and is communicated with a discharge port of the gear pump, and/or
a control valve that has a shape of ring with the second axis and/or the second shaft as a center and is arranged in a hub portion of the first pump gear and that controls the communication area between the intake passage and the discharge passage.

The intake passage and the discharge passage are communicated with a supply passage.

Check valves to permit the flow of fluid from the supply passage to the intake passage and to the discharge passage are arranged between the supply passage and the intake passage and/or between the supply passage and the discharge passage.

### BRIEF DESCRIPTION OF THE DRAWINGS

Fig. 1 is a sectional view of a fluid clutch constituted according to the present invention;
Fig. 2 is a view showing part of Fig. 1 along arrows A-A in a cut-away manner;
Fig. 3 is a view showing a major portion of the fluid clutch of Fig. 1 on an enlarged scale as well as the first operation state of a fluid pressure control circuit; and
Fig. 4 is a view showing the major portion of the fluid clutch of Fig. 1 on an enlarged scale as well as the second operation state of the fluid pressure control circuit.

### DETAILED DESCRIPTION OF THE PREFERRED EMBODIMENTS

A fluid clutch constituted according to the present invention will now be described in further detail with reference to the accompanying drawings.

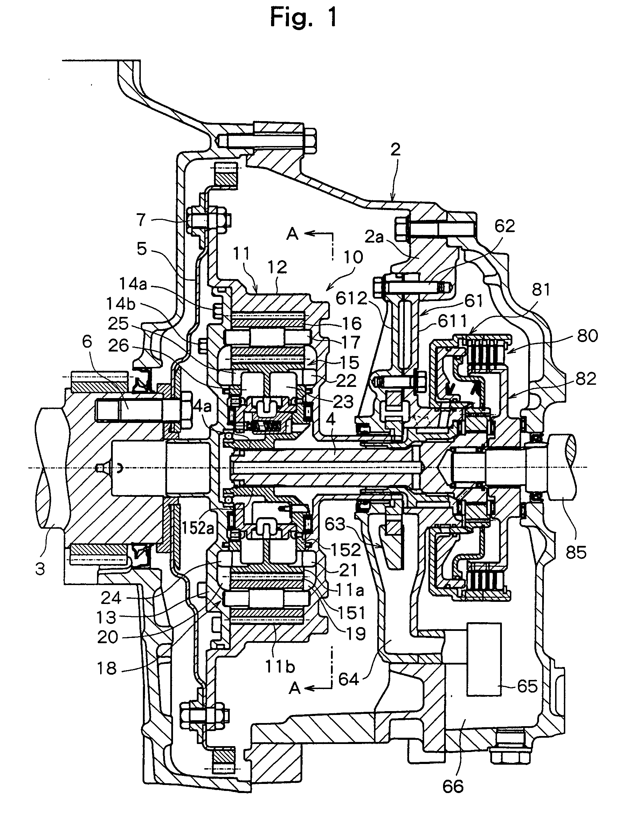

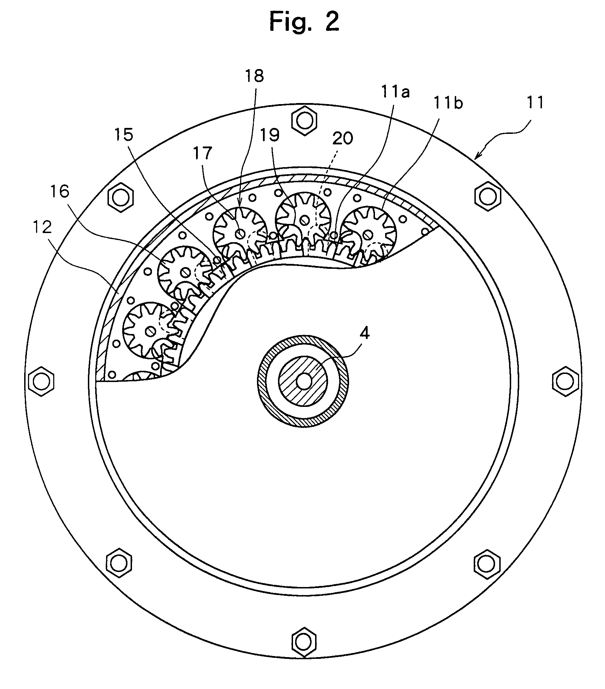

Fig. 1 is a sectional view of the fluid clutch constituted according to the present invention, and Fig. 2 is a sectional view along the line A-A of Fig. 1. The fluid clutch of the illustration has a clutch housing 2. An end of the first shaft 3 (e.g., crank shaft of an engine) is arranged at a left end portion in the central portion of the clutch housing 2. Further, the second shaft 4 is arranged in the central portion of the clutch housing 2 on the same axis as the first shaft 3. A coupling plate 5 is coupled, at its inner peripheral portion, onto the first shaft 3 by using bolts 6, and a casing 11 of a fluid clutch 10 is drive-coupled to the outer peripheral portion of the coupling plate 5 by using a fastening means 7 such as bolts and nuts or the like. The casing 11 is constituted by the first cup-shaped casing member 12 and the second casing member 13 coupled to the first casing member 12 by using fastening bolts 14a, 14b. The first casing member 12 is coupled to the coupling plate 5 by using a fastening means 7. The thus constituted casing 11 is provided with the first accommodation chamber 11a and a plurality of second accommodation chambers 11b. The plurality of second accommodation chambers 11b are provided on the outer peripheral side of the first accommodation chamber 11a as shown in Fig. 2.

The first pump gear 15 is arranged in the first accommodation chamber 11a formed in the casing 11. The pump gear 15 has a gear 151 formed on the outer periphery thereof. An internal spline 152a is formed in the inner peripheral portion of a hub portion 152 of the first pump gear 15, and is spline-fitted to an external spline 4a formed on the second shaft 4. Second pump gears 16 that are in mesh with the gear 151 of the first pump gear 15 are arranged in the plurality of second accommodation chambers 11b. The second pump gears 16 are each rotatably supported by support shafts 17 which are arranged at the centers of the second accommodation chambers 11b and are mounted on the casing 11. Thus, a plurality of gear pumps 18 are constituted by the first pump gear 15 and the plurality of second pump gears 16 which are in mesh with each other.

The first casing member 12 has intake port 19 for each of the plurality of gear pumps 18 constituted by the first pump gear 15 and the plurality of second pump gears 16 when the casing 11 is driven from the side of the first shaft 3. The intake ports 19 of the gear pumps 18 are each communicated through an intake passage 21. On the other hand, the second casing member 13 has discharge port 20 for each of the plurality of gear pumps 18 constituted by the first pump gear 15 and the plurality of second pump gears 16 when the casing 11 is driven from the side of the first shaft 3. The discharge ports 20 of the gear pumps 18, too, are each communicated through a discharge passage 24. The description hereinafter will be made using the names corresponding to the inlet ports 19 and discharge ports 20 of the gear pumps 18 in a state where the casing 11 is driven from the side of the first shaft 3. The intake ports 19 are communicated with a control valve 30 that will be described later, through the annular intake passage 21 formed in the first casing member 12, through an intake passage 22 and through an annular intake passage 23 formed in the hub portion 152 of the first pump gear 15 in the axial direction. On the other hand, the discharge ports 20 are communicated with the control valve 30 that will be described later, through an annular discharge passage 24 formed in the second casing member 13, through a discharge passage 25 and through an annular discharge passage 26 formed in the hub portion 152 of the first pump gear 15 in the axial direction.

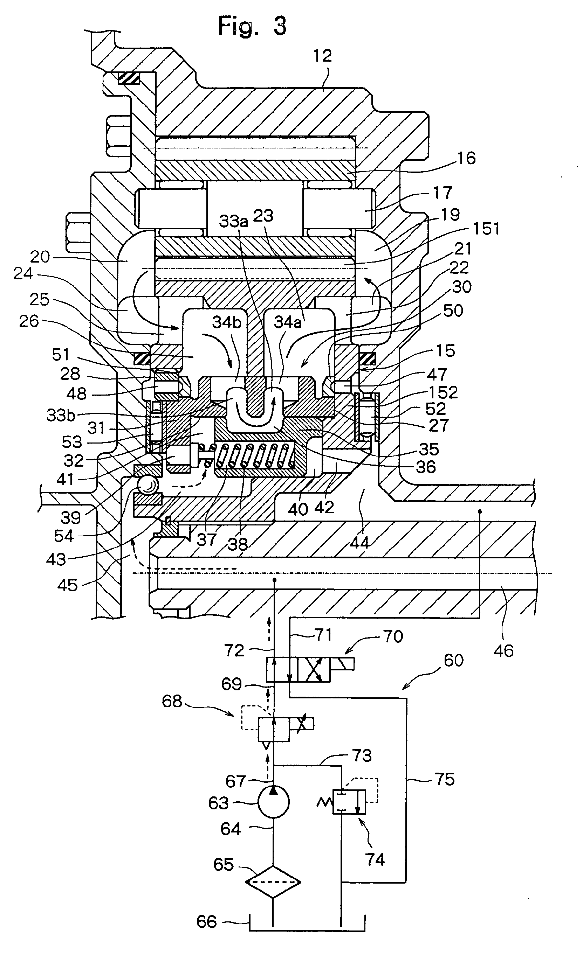

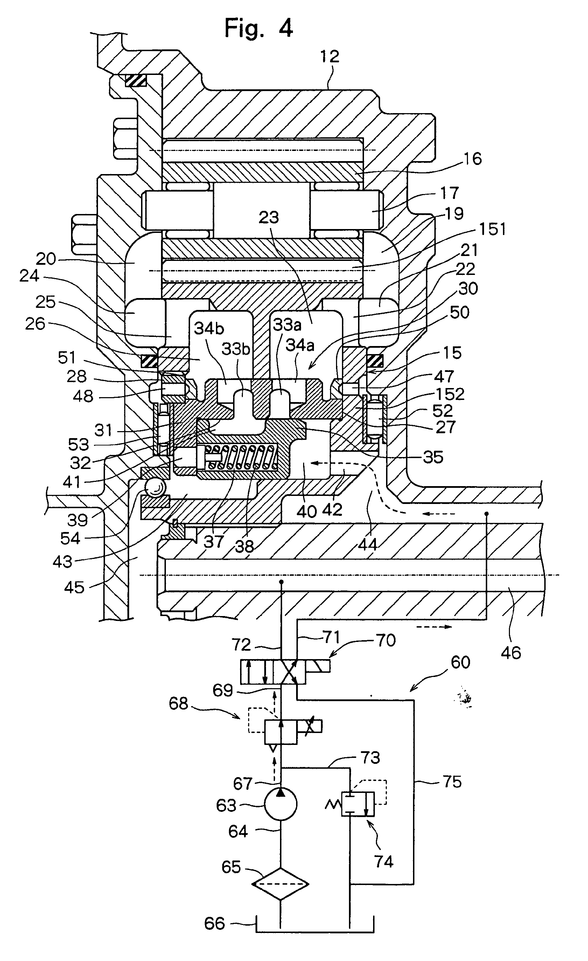

The annular control valve 30 with the second shaft 4 as a center is arranged in the hub portion 152 of the first pump gear 15. The control valve 30 will be described with reference to Figs. 3 and 4 which illustrate a major portion thereof on an enlarged scale.

The control valve 30 in the illustration has an annular valve body 31 that is formed in the hub portion 152 of the first pump gear 15 and is arranged in an annular chamber 27 communicated with the annular intake passage 23 and the discharge passage 26. The valve body 31 is inserted in the annular chamber 27 from the left open side in Fig. 3 and is secured to the hub portion 152 of the first pump gear 15 by using a fastening ring 28 which is externally threaded, so as to be screwed into the internal thread formed in the hub portion 152 of the first pump gear 15. In the valve body 31, there are formed an annular valve chamber 32, an annular first port 33a and an annular second port 33b for communicating the valve chamber 32 with the annular intake passage 23 and with the annular discharge passage 26. In the valve body 31, there are further formed a communication passage 34a for communicating the first port 33a with the intake passage 23, and a communication passage 34b for communicating the second port 33b with the discharge passage 26. An annular valve 35 is slidably arranged in the annular valve chamber 32 formed in the valve body 31 to slide in the axial direction. In the outer periphery of the annular valve 35 is formed a communication passage 36 which is an annular groove for communicating the first annular port 33a with the second annular port 33b. In the annular valve 35 are further formed a plurality of spring-accommodating holes 37 starting from the left end surface in Fig. 3. Compression springs 38 are arranged in the spring-accommodating holes 37. The compression coil springs 38 are engaged, at their left end portions, with spring receivers 39 fitted onto the valve body 31 thereby to push the annular valve 35 toward the right in Fig. 3 at all times.

On both sides of the annular valve 35, there are respectively formed the first fluid operation chamber 40 and the second fluid operation chamber 41 which are, respectively, communicated with control pressure passages 42 and 43 formed in the hub portion 152 of the first pump gear 15. The control pressure passage 42 is connected to a fluid pressure control circuit 60 that will be described later through a control pressure passage 44 formed between the first casing member 12 and the second shaft 4. On the other hand, the control pressure passage 43 is connected to the fluid pressure control circuit 60 that will be described later through a control pressure passage 45 formed between the second casing member 13 and the end face of the second shaft 4 and through a control pressure passage 46 formed in the second shaft 4. Therefore, when a control fluid is introduced into the first fluid operation chamber 40 through the control pressure passage 42, the annular valve 35 moves toward the left in Fig. 3 overcoming the spring forces of the compression coil springs 38. The moving amount of the annular valve 35 is determined by the pressure of the fluid acting into the first fluid operation chamber 40. As a result, the annular valve 35 is positioned between the first position at which it permits the first port 33a to be completely opened as shown in Fig. 3 and the second position at which it completely closes the first port 33a as shown in Fig. 4 thereby to control the opening area of the first port 33a in response to the pressure of the control fluid. Therefore, the control valve 30 works to control the communication areas of the intake passage communicated with the first port 33a and of the discharge passage communicated with the second port 33b.

In the illustration, the first supply passage 47 is formed in the hub portion 152 of the first pump gear 15 to communicate the annular intake passage 23 with the control pressure passage 44, and the second supply passage 48 is formed in the fastening ring 28 to communicate the discharge passage 26 with the control pressure passage 43. The first ring-shaped check valve 50 is arranged between the first supply passage 47 and the intake passage 23. The first check valve 50 is closed when the fluid pressure in the intake passage 23 is higher than the fluid pressure in the first supply passage 47, and is opened when the fluid pressure in the intake passage 23 is lower than the fluid pressure in the first supply passage 47. Therefore, the first check valve 50 works as a check valve which permits the flow of operation fluid from the supply passage into the intake passage. Further, the second ring-shaped check valve 51 is arranged between the second supply passage 48 and the discharge passage 26. The second check valve 51 is closed when the fluid pressure in the discharge passage 26 is higher than the fluid pressure in the second supply passage 48, and is opened when the fluid pressure in the discharge passage 26 is lower than the fluid pressure in the second supply passage 48. Therefore, the second check valve 51 works as a check valve which permits the flow of operation fluid from the supply passage into the discharge passage. In the illustration, bearings 52, 53 and 54 are arranged between the first casing member 12 and the hub portion 152 of the first pump gear 15, between the second casing member 13 and the valve body 31 of the control valve 30, and between the second casing member 13 and the inner periphery of the hub portion 152 of the first pump gear 15.

Reverting to Fig. 1, a pump housing 61 constituted by two pump housing members 611 and 612 is attached to an intermediate wall 2a of the clutch housing 2 by a fastening means such as bolts 62 or the like. A hydraulic pump 63 which is a source of fluid pressure for a fluid pressure control circuit 60 that will be described later, is arranged in the pump housing 61. In the pump housing 61 are further arranged control valves that constitute the fluid pressure control circuit 60 and also an operation fluid passage. The hydraulic pump 63 disposed in the pump housing 61 is rotatively driven by the first casing member 12. Further, a suction passage 64 is provided in the pump housing 61, and is connected to a fluid reservoir tank 66 through a fluid filter 65.

In the illustration, a wet-type multi-plate friction clutch 80 is arranged on the right of the pump housing 61 in Fig. 1. The wet-type multi-plate friction clutch 80 has a clutch outer 81 and a clutch center 82, the clutch outer 81 being spline-coupled to the second shaft 4, and the clutch center 82 being spline-coupled to, for example, the input shaft 85 of the transmission. The wet-type multi-plate friction clutch 80 may be constituted in a customary manner which has no direct relationship to the present invention, and is not described here in detail.

Next, the fluid pressure control circuit 60 will be described with reference to Figs. 3 and 4.

As the hydraulic pump 63 is operated, the fluid pressure control circuit 60 sucks up the control fluid stored in the fluid reservoir tank 66 through the suction passage 64 and the filter 65, and blows out it into the passage 67. The control fluid blown out into the passage 67 flows into a control passage 69 through a proportional electromagnetic pressure control valve 68 which controls the pressure flowing into the control passage 69 in proportion to the voltage applied. The control fluid flowing into the control passage 69 is selectively fed into a control pressure passage 71 connected to the control pressure passage 44 through an electromagnetic direction control valve 70 or into a control pressure passage 72 connected to the control pressure passage 46. That is, when the electromagnetic direction control valve 70 is de-energized (turned off), the control passage 69 is communicated with the control pressure passage 72 and the control pressure passage 71 is communicated with a return passage 75, as shown in Fig. 3. When the electromagnetic direction control valve 70 is energized (turned on), on the other hand, the control passage 69 is communicated with the control pressure passage 71 and the control pressure passage 72 is communicated with the return passage 75. The fluid pressure control circuit 60 in the illustration has a relief passage 73 communicated with the passage 67, and a relief valve 74 is disposed in the relief passage 73.

The fluid clutch according to the illustration is constituted as described above, and its operation will now be described.

As shown in Fig. 3, when the electromagnetic direction control valve is de-energized (turned off), the control passage 69 connected to the proportional electromagnetic pressure control valve 68 is communicated with the control pressure passage 72 and the control pressure passage 71 is communicated with the return passage 75. Accordingly, the control fluid blown out from the hydraulic pump 63 flows into the second fluid operation chamber 41 of the control valve 30 through the passage 67, proportional electromagnetic pressure control valve 68, control passage 69, control pressure passage 72, control pressure passage 46, control pressure passage 45 and control pressure passage 43. Therefore, the annular valve 35 moves toward the right in the drawing due to the control fluid pressure and spring forces of the compression coil springs 38, and is brought to the first position to completely open the first port 33a. In this case, the operation fluid in the first fluid operation chamber 40 of the control valve 30 is returned back to the fluid reservoir tank 66 through the control pressure passage 42, control pressure passage 44, control pressure passage 71, electromagnetic direction control valve 70 and return passage 75. As a result, the operation fluid blown out by the plurality of gear pumps 18 constituted by the first pump gear 15 and the plurality of second pump gears 16, circulates into the intake ports 19 through the discharge ports 20, discharge passage 24, discharge passage 25, discharge passage 26, communication passage 34b, second port 33b, communication passage 36, first port 33a, communication passage 34a, intake passage 23, intake passage 22 and intake passage 21 as indicated by arrows in the drawing. Since the second port 33b and the first port 33a are completely communicated with each other, the pressure of the circulating operation fluid does not increase on the side of the discharge ports 20, and since the load of the gear pumps 18 is small, the transmission of torque is smallest. In the illustrated embodiment, since the control valve 30 is of an annular shape, it is allowed to increase the flow passage area of the communication passage 36 that communicates the first port 33a with the second port 33b. Accordingly, the gear pumps 18 bear a very small load and the transmission of torque can be decreased to be nearly zero (0).

When the electromagnetic direction control valve 70 is energized (turned on) as shown in Fig. 4, on the other hand, the control passage 69 connected to the proportional electromagnetic pressure control valve 68 is communicated with the control pressure passage 71 and the control pressure passage 72 is communicated with the return passage 75. Accordingly, the control fluid blown out from the hydraulic pump 63 flows into the first fluid operation chamber 40 of the control valve 30 through the passage 67, proportional electromagnetic pressure control valve 68, control passage 69, control pressure passage 71, control pressure passage 44 and control pressure passage 42. Therefore, the annular valve 35 moves toward the left in the drawing overcoming the spring forces of the compression coil springs 38. At this moment, when a maximum voltage is applied to the proportional electromagnetic pressure control valve 68, the control fluid pressure acting in the first fluid operation chamber 40 becomes a maximum, and the annular valve 35 is brought to the second position to completely close the first port 33a. In this case, the operation fluid in the second fluid operation chamber 41 of the control valve 30 is returned back to the fluid reservoir vessel 66 through the control pressure passage 43, control pressure passage 46, control pressure passage 72, electromagnetic direction control valve 70 and return passage 75. As a result, the fluid circuit which comprises the discharge passage and the intake passage of the plurality of gear pumps 18 constituted by the first pump gear 15 and the plurality of second pump gears 16 is closed. When the casing 11 is driven from the side of the first shaft 3 in this state, the pressure drops on the side of the intake ports 19 of the gear pumps 18. However, a drop in the pressure in the intake passage 23 causes the first check valve 50 to be opened, i.e., the fluid flows in through the supply passage 47 and hence, no negative pressure generates. The pressure, on the other hand, rises on the side of the discharge ports 20 of the gear pumps 18. In this state, the gear pumps 18 bear the greatest load and the greatest torque is transmitted.

In the state shown in Fig. 4, when the voltage applied to the proportional electromagnetic pressure control valve 68 decreases, the control fluid pressure acting in the first fluid operation chamber 40 decreases, and the amount of closing the first port 33a exerted by the annular valve 35 is adjusted, i.e., the communication area of the first port 33a is adjusted. By controlling the voltage applied to the proportional electromagnetic pressure control valve 68, therefore, it is allowed to control the load exerted on the gear pumps 18, i.e., to control the transmission of torque.

In the foregoing was described the state where the casing 11 was driven from the side of the first shaft 3, i.e., the state where the gear pumps 16 were driven from the side of the first shaft 3. When the gear pumps 16 are driven from the side of the second shaft 4, on the other hand, the relationships between the discharge ports and the discharge passage and between the intake ports and the intake passage are reversed.

The fluid clutch according to the present invention is constituted as described above, and exhibits action and effect as described below.

Namely, by controlling the communication areas of the intake passage and the discharge passage of the gear pump by the control valve, the fluid clutch of the invention makes it possible to easily control the transmission of torque. In the fluid clutch of the invention, further, the control valve is formed in an annular shape making it possible to increase the flow passage area between the intake passage and the discharge passage. Therefore, the gear pump has a very small load, and the transmission of torque can be decreased to be nearly zero (0). Therefore, the drag torque can be decreases in a state where the first shaft rotates but the second shaft is at rest.

It will be understood that those skilled in the art can easily create various other embodiments according to this invention without leaving the scope of the afore-mentioned description and/or the scope of the attached claims.

## Claims

1. A fluid clutch arranged between the first shaft (3) and the second shaft (4) that are arranged on the same axis, comprising:
a casing (11) drive-coupled to said first shaft (3);
a gear pump (18) comprising the first pump gear (15) that is arranged in said casing (11), drive-coupled to said second shaft (4) and provided with a gear (151) on the outer periphery thereof and the second pump gears (16) arranged in a pump chamber which are formed in said casing (11) and are in mesh with said first pump gear (15);
an intake passage (21) that is formed in said casing (11) and is communicated with an intake port (19) of said gear pump (18);
a discharge passage (24) that is formed in said casing (11) and is communicated with a discharge port (20) of said gear pump (18); and
a control valve (30) that has a shape of ring with the second axis as a center and is arranged in a hub portion (152) of the first pump gear (15) and that controls the communication area between the intake passage (21) and the discharge passage (24).

2. A fluid clutch according to claim 1, wherein said intake passage (21) and said discharge passage (24) are communicated with a supply passage (47), and check valves (50; 51) to permit the flow of fluid from said supply passage (47; 48) to said intake passage (21, 22, 23) and to said discharge passage (24, 25, 26) are arranged between said supply passage (47) and said intake passage (21, 22, 23) and between said supply passage (48) and said discharge passage (24, 25, 26).
